(19) **Europäisches Patentamt**

**European Patent Office**

**Office européen des brevets**

(11) **EP 1 688 635 A1**

(12) **EUROPEAN PATENT APPLICATION**
published in accordance with Art. 158(3) EPC

(43) Date of publication:
09.08.2006 Bulletin 2006/32

(51) Int Cl.:
*F16D 48/06* (2006.01)

(21) Application number: 03772705.4

(86) International application number:
**PCT/JP2003/014373**

(22) Date of filing: 12.11.2003

(87) International publication number:
**WO 2005/047723 (26.05.2005 Gazette 2005/21)**

(84) Designated Contracting States:
DE FR

(71) Applicant: **Hitachi, Ltd.**
**Tokyo 100-8280 (JP)**

(72) Inventors:
• **SAKAMOTO, Hiroshi,**
**c/o Hitachi Research Laboratory**
**Hitachi-shi,**

**Ibaraki 319-1292 (JP)**
• **MINOWA, Toshimichi**
**c/o Hitachi Research Laboratory**
**Hitachi-shi,**
**Ibaraki 319-1292 (JP)**

• **OKADA, Takashi,**
**c/o Hitachi Research Laboratory**
**Hitachi-shi,**
**Ibaraki 319-1292 (JP)**
• **OCHI, Tatsuya,**
**c/o Hitachi Research Laboratory**
**Hitachi-shi,**
**Ibaraki 319-1292 (JP)**

(74) Representative: **Beetz & Partner**
**Patentanwälte,**
**Steinsdorfstrasse 10**
**80538 München (DE)**

(54) **AUTOMOBILE, ITS CONTROLLER AND ITS DRIVING POWER CONTROLLER**

(57) In an automobile in which torque is transmitted to a transmission 50 from an engine 7 via a clutch 8, when the engine speed differential value is within a predetermined range, the position of the clutch 8 is learned by a clutch position learning unit 205 and the transmission torque of the clutch 8 is learned by a clutch transmission torque learning unit 206 on the basis of an engine torque estimated value, and the clutch characteristics are corrected by a clutch characteristic correcting unit 207 on the basis of the clutch position learned value and the clutch transmission torque learned value thus learned. Accordingly, the relationship between the clutch position and the transmission torque can be grasped without mounting a sensor for detecting the road surface condition, vehicle weight, or the like, thereby making it possible to avoid an increase in cost. Further, by correcting the clutch characteristics on the basis of the clutch position learned value and the clutch transmission torque learned value thus learned, and calculating the target position for the clutch on the basis of the clutch characteristics, it is possible to prevent a deterioration in start feeling due to cross-machine variations or degradation with time. As a result, when the accelerator opening is within a predetermined range, the period of time from brake off to the engagement of the clutch can be converged to within a predetermined range through the correction of the clutch characteristics.

FIG. 2

**Description**

FIELD OF THE INVENTION

The present invention relates to control of an automobile equipped with an automatic clutch capable of automatically engaging and disengaging a friction clutch, and more specifically to a clutch learning control method that prevents a deterioration in start feeling due to cross-machine variations or degradation with time of the clutch.

BACKGROUND OF THE INVENTION

The development of an automatic clutch capable of automatically engaging and disengaging a friction clutch has progressed in recent years with a view to realizing easy drive. Automobiles equipped with such an automatic clutch realize smooth engaging/disengaging operations, thereby achieving both easy drive and a reduction in clutch engagement shock. While this makes it necessary to accurately grasp the clutch transmission torque (clutch pressing force) in a predetermined clutch position, since the relationship between the clutch position and the clutch transmission torque (clutch pressing force) changes due to cross-machine variations or degradation with time, it is necessary to learn the relationship between the clutch position and the clutch transmission torque (clutch pressing force).

With this as a backdrop, Japanese Patent Laid-Open No. HII-132256 describes a method of detecting the vehicle start on the basis of the differential value of the speed on the clutch output side and learning the clutch position at this time as the half-clutch position (hereinafter, referred to as the "vehicle start position").

Further, the above publication also describes a method called 2nd learning as a first known technique. According to this method, under the condition that the parking brake is being applied while the vehicle is at rest, the transmission is shifted into one of the gears (for example, the 2nd gear), the engine speed is increased to a predetermined speed through engine control, the clutch is automatically operated toward the engaging side gradually, and the clutch position at the time when the engine speed has decreased to a predetermined speed is learned as the half-clutch position (hereinafter, referred to as the "2nd gear learned position").

Further, the above publication also describes a method called N (neutral) learning as a second known technique. According to this method, when the transmission is in the neutral position while the vehicle is at rest, the clutch is automatically operated toward the engaging side gradually, and the clutch position at the time when the speed on the clutch output side has become a predetermined value or more is learned as the half-clutch position (hereinafter, referred to as the "N learned position").

With the method of learning the vehicle start position described in the above publication, learning can be performed simultaneously with the vehicle start, whereby special engine control or clutch control as required for the above-described two known techniques (2nd learning, N learning) becomes unnecessary, thus allowing for extremely easy control.

With the learning method described in Japanese Patent Laid-Open No.H11-132255, however, it is difficult to deal with changes in running resistance (changes in the gradient of the road surface or in vehicle weight). Assuming that the inertial mass is Ie and the speed is Ne on the clutch input side (engine side), the inertial mass is Iv and the speed is Ne on the clutch output side (tire side), the engine torque is Te, the clutch transmission torque is Tc, and the running resistance is Rv, the equations of motion on the clutch input side (engine side) and the clutch output side (tire side) are represented by Expressions (1), (2), respectively.

$$\texttt{Clutch input side: Ie·(dNe/dt) = Te - Tc ... (1)}$$

$$\texttt{Clutch output side: Iv·(dNi/dt) = Tc - Rv ... (2)}$$

As can be appreciated from Expression (2), the speed differential value dNi/dt on the clutch output side depends on the running resistance Rv. Since the clutch transmission torque Tc at the vehicle start position changes due to changes in the running resistance Rv, a sensor for detecting the gradient of the road surface, vehicle weight, or the like is necessary in order to accurately grasp the relationship between the clutch position and the transmission torque, which inevitably drives up cost.

SUMMARY OF THE INVENTION

From Expression (1) above, assuming that the engine speed differential value dNe/dt $\cong$ 0, then the clutch transmission torque Tc $\cong$ the engine torque Te. Further, since it is understood from Expression (1) that the engine speed differential value dNe/dt does not depend on the running resistance Rv, when the engine speed differential value dNe/dt $\cong$ 0, the clutch transmission torque Tc can be easily estimated on the basis of the engine torque Te.

In view of this, according to the present invention, when the differential value of the engine speed is within a predetermined range, the position and/or transmission torque of the clutch is learned, and the target position for the clutch is calculated on the basis of the learned clutch position and/or transmission torque. The clutch is controlled on the basis of the target position.

BRIEF DESCRIPTION OF THE DRAWINGS

Fig. 1 is a schematic diagram of an automobile system according to an embodiment of the present invention.

Fig. 2 is a control block diagram of Fig. 1.

Fig. 3 is a schematic drawing of a dry single-disc clutch shown in Fig. 1.

Fig. 4 is a diagram showing the clutch characteristics of the dry single-disc clutch shown in Fig. 1.

Fig. 5 is a diagram showing the contents of processing performed by an engine torque estimating means 201 and an engine speed differential value operating means 202 shown in Fig. 2.

Fig. 6 is a diagram showing the contents of processing performed by a clutch target position operating means 203 shown in Fig. 2.

Fig. 7 is a diagram showing the contents of processing performed by a learning permission determining means 204 shown in Fig. 2.

Fig. 8 is a diagram showing the contents of processing performed by a clutch position learning means 205 shown in Fig. 2.

Fig. 9 is a diagram showing the contents of processing performed by a clutch transmission torque learning means 206 shown in Fig. 2.

Fig. 10 is a diagram showing the contents of processing performed by a clutch characteristic correcting means 207 shown in Fig. 2.

Fig. 11 is a diagram showing a method of correcting the clutch characteristics in Fig. 1.

Fig. 12 is a time chart illustrating the characteristics at start in Fig. 1.

Fig. 13 is a time chart showing the characteristics at start in Fig. 1.

Fig. 14 is a diagram showing the relationship between clutch transmission torque and clutch position in the learning control of Fig. 1.

Fig. 15 is a time chart showing the characteristics at start when the accelerator opening varies in Fig. 1.

Fig. 16 is a time chart showing the characteristics at start when creep control is performed in Fig. 1.

DETAILED DESCRIPTION OF THE PREFERRED EMBODIMENTS

Hereinbelow, an embodiment of the present invention will be described with reference to the drawings.

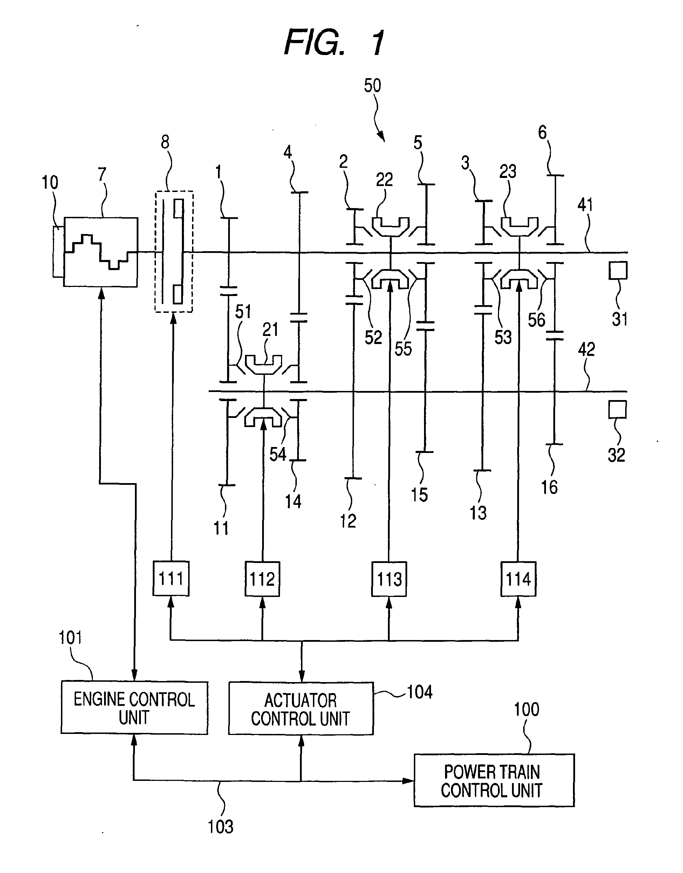

Fig. 1 is a block diagram of an automobile system according to an embodiment of the present invention to which an automated manual transmission (hereinafter, referred to as the automatic MT) is applied as an automatic transmission.

In an engine 7, the intake air flow is controlled by an electronic throttle 10 (not shown) (composed of a throttle valve, a drive motor, and a throttle sensor), and an amount of fuel commensurate with the air flow is injected from a fuel injection device (not shown). Further, the ignition timing is determined on the basis of signals indicative of an air-fuel ratio, which is determined from the air flow and the amount of fuel, an engine speed, and the like, and ignition is effected by an ignition device (not shown). While there are the following types of fuel injection device: those of an intake port injection system in which fuel is directly injected to an intake port; and those of a cylinder injection system in which fuel is directly injected into a cylinder; it is desirable to select an engine of a system that allows reduced fuel consumption and provides high exhaust performance through comparison of the operating range (region determined by the engine torque and engine speed) required of the engine between the two systems.

A clutch 8 is interposed between the engine 7 and an input shaft 41. The pressing force on the clutch 8 can be adjusted by controlling the position of the clutch 8, thereby making it possible to transmit power from the engine 7 to the input shaft 41. Further, the transmission of power from the engine 7 to the input shaft 41 can be cut off by releasing the clutch 8. Generally, a dry single-disc friction clutch is used as the clutch 8. The torque to be transmitted from the engine 7 to the input shaft 41 can be adjusted by adjusting the pressing force on the clutch 8. An actuator 111 for the clutch 8 is composed of a motor (not shown) and a mechanical mechanism for converting the rotary motion of the motor into a linear motion. The pressing force on the clutch 8 is controlled by the actuator 111. Further, any clutch is applicable to the clutch 8 as long as it enables adjustment of the transmitted torque, such as a wet multiple-disc friction clutch or electromagnetic clutch. The clutch 8 is commonly used in a vehicle equipped with an ordinary manual transmission. The vehicle can be started by gradually pressing on the clutch 8.

A gear 1 and a gear 4 are fixed to the input shaft 41, and are in mesh with a gear 11 and a gear 14 that are rotatably mounted to an output shaft 42, respectively. Further, a gear 2, a gear 3, a gear 5, and a gear 6 are rotatably mounted to the input shaft 4, and are respectively in mesh with a gear 12, a gear 13, a gear 14, and a gear 16 that are fixed to the output shaft 42.

Next, a synchromesh clutch composed of a sleeve and a synchromesh device will be described.

A synchromesh clutch is commonly used in vehicles equipped with an ordinary manual transmission, and the synchromesh device thereof enables rotation synchronization at the time of gear switching, thereby facilitating gear change operations.

First, a synchromesh clutch composed of a sleeve 21, and a synchromesh device 51 and a synchromesh device 54 will be described.

The output shaft 42 is provided with the sleeve 21 for directly connecting the gear 11 and the gear 14 to the output shaft 42, and a stopper (not shown) for preventing the movement of the gear 11 and gear 14 in the axial direction of the output shaft 42. Grooves (not shown) that come into meshing engagement with a plurality of grooves (not shown) in the output shaft 42 are provided on the inner side of the sleeve 21. Although the sleeve 21 is movable in the axial direction of the output shaft 42, the movement of the sleeve 21 in the rotation direction of the output shaft 42 is restricted. The torque of the sleeve 21 is thus transmitted to the output shaft 42. In order to transmit the torque of each of the gear 11 and gear 14 to the output shaft 42, it is necessary to move the sleeve 21 in the axial direction of the output shaft 42 to thereby directly connect the gear 11 or gear 14 and the sleeve 21 with each other. Further, the synchromesh device 51 is provided between the gear 11 and the sleeve 21. By pressing the sleeve 21 against the synchromesh device 51, a frictional force is generated between the gear 11 and the synchromesh device 51. At this time, torque is transmitted from the gear 11 to the sleeve 21 via the synchromesh device 51, whereby the speed of the gear 11 is synchronized with the speed of the sleeve 21. When the speed synchronization is finished, the sleeve 21 pushes its way through a balk ring (not shown) provided to the synchromesh device 51 and directly connects to the gear 11. Likewise, the synchromesh device 54 is provided between the gear 14 and the sleeve 21. By pressing the sleeve 21 against the synchromesh device 54, a frictional force is generated between the gear 14 and the synchromesh device 54. At this time, torque is transmitted from the gear 14 to the sleeve 21 via the synchromesh device 54, whereby the speed of the gear 14 is synchronized with the speed of the sleeve 21. When the speed synchronization is finished, the sleeve 21 pushes its way through a balk ring (not shown) provided to the synchromesh device 54 and directly connects to the gear 14. An actuator 112 for the sleeve 21 is composed of a motor (not shown) and a mechanical mechanism for converting the rotary motion of the motor into a linear motion. The force with which the sleeve 21 is pressed against the synchromesh device 51 or the synchromesh device 54 is controlled by the actuator 112. The actuator used is not limited to the electric actuator mentioned above but may be a hydraulic actuator or other types of actuator for converting a rotary motion into a linear motion. The same applies to all of the actuators described below.

Next, a synchromesh clutch composed of a sleeve 22, and a synchromesh device 52 and a synchromesh device 55 will be descried.

The input shaft 41 is provided with the sleeve 22 for directly connecting the gear 2 and the gear 5 to the input shaft 41, and a stopper (not shown) for preventing the movement of the gear 2 and gear 5 in the axial direction of the input shaft 41. Grooves (not shown) that come into meshing engagement with a plurality of grooves (not shown) in the input shaft 41 are provided on the inner side of the sleeve 22. Although the sleeve 22 is movable in the axial direction of the input shaft 41, the movement of the sleeve 22 in the rotation direction of the input shaft 41 is restricted. The torque of the input shaft 41 is thus transmitted to the sleeve 22. In order to transmit the torque of the input shaft 41 to each of the gear 2 and the gear 5, it is necessary to move the sleeve 22 in the axial direction of the input shaft 41 to thereby directly connect the gear 2 or the gear 5 and the sleeve 22 with each other. Further, the synchromesh device 52 is provided between the gear 2 and the sleeve 22. By pressing the sleeve 22 against the synchromesh device 52, a frictional force is generated between the synchromesh device 52 and the gear 2. At this time, torque is transmitted from the sleeve 22 to the gear 2 via the synchromesh device 52, whereby the speed of the sleeve 22 is synchronized with the speed of the gear 2. When the speed synchronization is finished, the sleeve 22 pushes its way through a balk ring (not shown) provided to the synchromesh device 52 and directly connects to the gear 2. Likewise, the synchromesh device 55 is provided between the gear 5 and the sleeve 22. By pressing the sleeve 22 against the synchromesh device 55, a frictional force is generated between the synchromesh device 52 and the gear 5. At this time, torque is transmitted from the sleeve 22 to the gear 5 via the synchromesh device 52, whereby the speed of the sleeve 22 is synchronized with the speed of the gear 5. When the speed synchronization is finished, the sleeve 22 pushes its way through a balk ring (not shown) provided to the synchromesh device 52 and directly connects to the gear 5. An actuator 113 for the sleeve 22 is composed of a motor (not shown) and a mechanical mechanism for converting the rotary motion of the motor into a linear motion. The force with which the sleeve 22 is pressed against the synchromesh device 52 or the synchromesh device 55 is controlled by the actuator 113.

Next, a synchromesh clutch composed of a sleeve 23, and a synchromesh device 53 and a synchromesh device 56 will be descried.

The input shaft 41 is provided with the sleeve 23 for directly connecting the gear 3 and the gear 6 to the input shaft 41, and a stopper (not shown) for preventing the movement of the gear 3 and gear 6 in the axial direction of the input shaft 41. Grooves (not shown) that come into meshing engagement with a plurality of grooves (not shown) in the input shaft 41 are provided on the inner side of the sleeve 23. Although the sleeve 23 is movable in the axial direction of the input shaft 41, the movement of the sleeve 23 in the rotation direction of the input shaft 41 is restricted. The torque of the input shaft 41 is thus transmitted to the sleeve 23. In order to transmit the torque of the input shaft 41 to each of the gear 3 and gear 6, it is necessary to move the sleeve 23 in the axial direction of the input shaft 41 to thereby directly connect the gear 3 or gear 6 and the sleeve 23 with each other. Further, the synchromesh device 53 is provided between the gear 3 and the sleeve 23. By pressing the sleeve 23 against the synchromesh device 53, a frictional force is generated between the synchromesh device 53 and the gear 3. At this time, torque is transmitted from the sleeve 23 to the gear 3 via the synchromesh device 53, whereby the speed of the sleeve 23 is synchronized with the speed of the gear 3. When the speed synchronization is finished, the sleeve 23 pushes its way through a balk ring (not shown) provided to the synchromesh device 53 and directly connects to the gear 3. Likewise, the synchromesh device 56 is provided between the gear 6 and the sleeve 23. By pressing the sleeve 23 against the synchromesh device 56, a frictional force is generated between the synchromesh device 56 and the gear 6. At this time, torque is transmitted from the sleeve 23 to the gear 6 via the synchromesh device 56, whereby the speed of the sleeve 23 is synchronized with the speed of the gear 6. When the RPM synchronization is finished, the sleeve 23 pushes its way through a balk ring (not shown) provided to the synchromesh device 56 and directly connects to the gear 6. An actuator 114 for the sleeve 23 is composed of a motor (not shown) and a mechanical mechanism for converting the rotary motion of the motor into a linear motion. The force with which the sleeve 23 is pressed against the synchromesh device 53 or the synchromesh device 56 is controlled by the actuator 114.

The engine 7 is controlled by an engine control unit 101. The actuator 111, the actuator 112, the actuator 113, and the actuator 114 are controlled by an actuator control unit 104. While in the embodiment of the present invention, the combination of the motor and the mechanical mechanism is used as each of the actuator 111, the actuator 112, the actuator 113, and the actuator 114, as described above; however, a hydraulic actuator using an electromagnetic valve or the like may also be employed.

Various signals from an accelerator opening sensor, a vehicle speed sensor and the like (not shown), and also the operational states of the engine 7, the clutch 8, and a transmission 50 (the clutch position, RPM, torque, gear ratio, and the like) are input to a power train control unit 100. On the basis of these information, the power train control unit 100 collectively controls the engine control unit 101 and the actuator control unit 104 using a LAN (Local Area Network) 103.

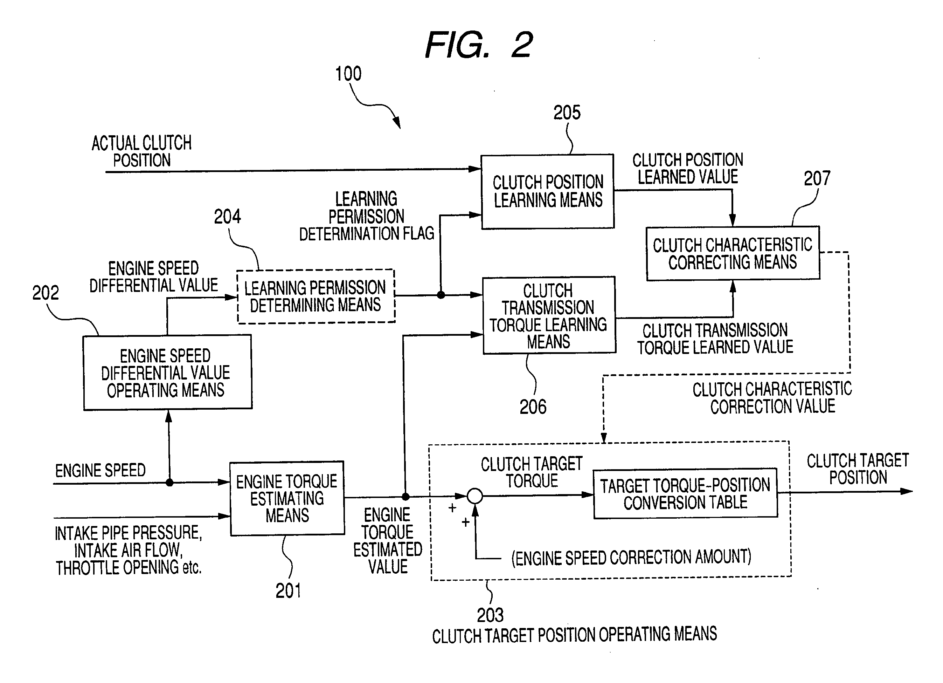

Fig. 2 is a block diagram of an automobile system according to an embodiment of the present invention.

An engine torque estimating means 201 estimates the torque of the engine 7 on the basis of the engine speed detected by an engine speed sensor such as a crank angle sensor, and the intake pipe pressure detected by an intake pipe pressure sensor. The engine torque estimating means 201 may estimate the torque of the engine 7 on the basis of the intake air flow, the throttle opening, or the like instead of the intake pipe pressure. It should be noted that the engine torque estimating means 201 may be realized by communicating the torque of the engine 7 calculated in the engine control unit 101 to the power train unit 100 via the LAN, or may be substituted by a torque sensor or the like for detecting the torque of the engine 7.

An engine speed differential value operating means 202 calculates the differential value of engine speed on the basis of the engine speed detected by the engine speed sensor such as a crank angle sensor.

A clutch target position operating means 203 calculates clutch target torque by adding torque corresponding to the amount of engine speed correction to the engine torque estimated value estimated by the engine torque estimating means 201, and converts the clutch target torque into a clutch target position using a target torque-position conversion table stored in the power train control unit 100.

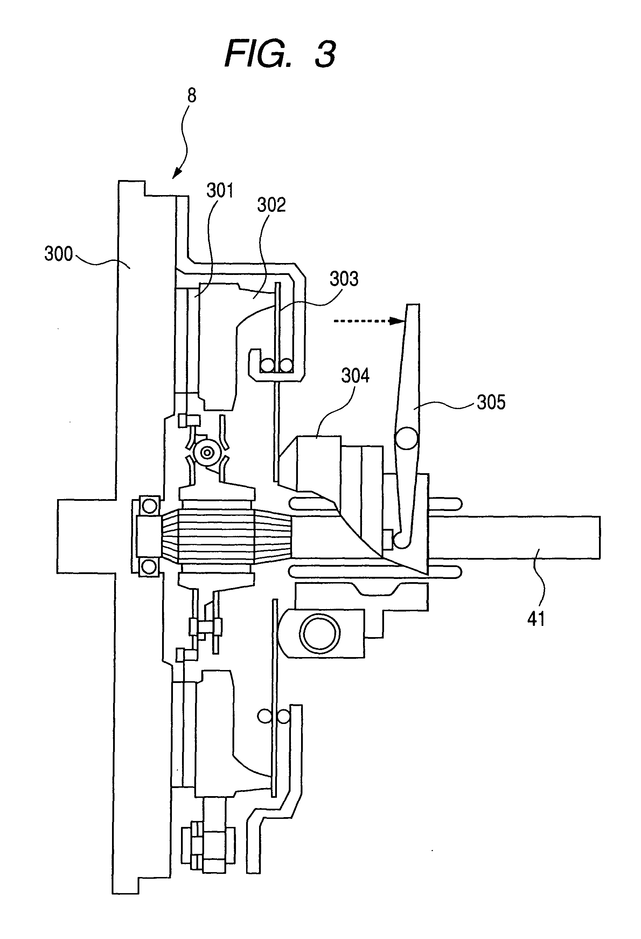

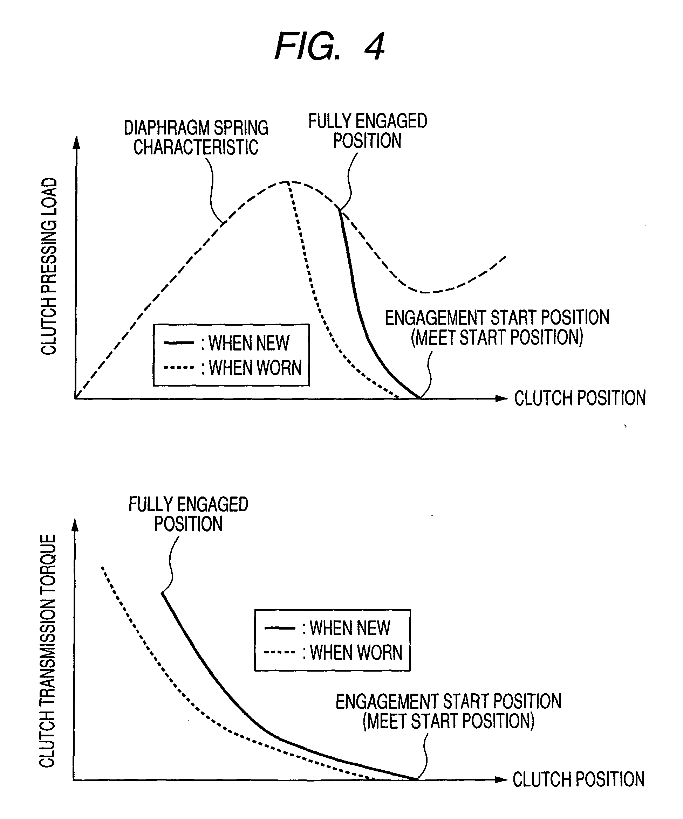

Now, referring to Fig. 3 and Fig. 4, description will be given of the clutch characteristics used for setting the torque-position conversion table.

Fig. 3 is a schematic drawing of the clutch 8 as applied to a dry single-disc clutch. A dry single-disc clutch is commonly used in conventional manual transmissions, and is also applied to the automobile equipped with the automatic MT (automated manual transmission) shown in Fig. 1.

When a load is applied in the direction of the dotted arrow in Fig. 3 by the actuator 111, a release bearing 304 is pressed on by a release fork 305. Accordingly: the pressing force on a clutch disc 301, which is slidably spline-coupled onto the input shaft 41 from a pressure plate 302, is removed; and the coupling between a flywheel 300, which is directly coupled to the crankshaft of the engine 7, and the input shaft 41 is released; whereby the clutch 8 is released. As the load applied to the release fork 305 in the arrow direction is gradually released, due to the reaction force of a diaphragm spring 303, the pressing force exerted on the clutch disc 301 from the pressure plate 302 gradually increases, whereby the coupling between the flywheel 300 and the input shaft 41 is started. The clutch 8 is thus brought into a semi-engaged state. When the load acting in the direction of the dotted arrow in the drawing becomes zero, the pressing force exerted on the clutch disc 301 from the pressure plate 302 becomes equal to the reaction force of the diaphragm spring 303, thus bringing the clutch 8 into a fully engaged state. In the fully engaged state, the reaction force of the diaphragm spring 303 and the reaction force of the clutch disc 301 are in balance with each other at the fully engaged position. To release the clutch 8, the pressure plate 302 is moved by controlling the release fork 305 until a stroke required for the release from the fully engaged position is secured. The load required for the release bearing 304 at this time corresponds to the difference between the pressing load of the pressure plate 302 and the reaction force inherent in the clutch disc 301. It should be noted that in this embodiment, the description is directed to the case where the stroke of the clutch disc 301 is used as the clutch position. Although the clutch position may be directly detected by mounting a position sensor near the clutch disc, in view of space limitations, a commonly employed method for detecting the clutch position is to convert the rotation angle of the release fork 305, which is equivalent to the clutch position, into a position. Further, depending on the configuration of the actuator 111, another conceivable method is to detect the position of the movable portion of the actuator or the rotation angle of the motor and convert it to a clutch position.

Fig. 4 shows the clutch characteristics in the case where a dry single-disc clutch is employed.

The upper diagram of Fig. 4 shows the characteristics of the clutch position and clutch pressing load. The clutch pressing load in Fig. 4 refers to the pressing load of the clutch disc 301 against the flywheel 300. The clutch pressing load is determined by the surface compression characteristics (cushioning characteristics) of the clutch disc 301. Since the surface compression characteristics are determined by the deflection characteristics of a cushion spring (not shown) interposed between the plates of the clutch disc 301, as shown in Fig. 4, the clutch pressing load is represented as a function of the clutch position. Further, as described above with reference to Fig. 3, since the reaction force of the diaphragm spring 303 and the reaction force of the clutch disc 301 are in balance with each other at the fully engaged position, the clutch pressing load at the fully engaged position also coincides with the load of the diaphragm spring 303. As described above, the clutch pressing load, that is, the pressing load of the clutch disc 301 against the flywheel 300, is represented as a function of the clutch position, and while its characteristic is as indicated by the solid line in the drawing when the clutch is new, the clutch position changes as the clutch disc 301 gets worn due to repeated engagement/ release operations. Further, the relationship between the clutch position and the clutch pressing load also changes as the cushion spring (not shown) interposed between the plates of the clutch disc 301 degrades with time. Hence, the characteristic of the clutch pressing load when the clutch is worn is as indicated by the dotted line in the drawing.

The lower diagram of Fig. 4 shows the characteristics of the clutch position and clutch transmission torque. Assuming that the clutch pressing load is Fc, the clutch transmission torque Tc can be represented by Expression (3).

$$\text{Tc} = \mu \times k \times \text{Fc} \ldots \quad (3)$$

Here, $\mu$ represents the coefficient of dynamic friction between the flywheel 300 and the clutch disc 301, and k is a constant determined from the inner diameter of the friction surface, the outer diameter of the friction surface, the number of friction plates, and the like. As can be appreciated from Expression (3), the clutch transmission torque Tc is a function of the clutch pressing load Fc. Thus, as shown in Fig. 4, the clutch transmission torque also becomes a function of the clutch position. As in the case of the clutch pressing load characteristic, the characteristic when the clutch is new is represented by the solid line, and the characteristic when the clutch is worn is represented by the dotted line.

The clutch target position operating means 203 converts the clutch target torque into the clutch target position using the target torque-position conversion table set on the basis of the clutch characteristics as described above with reference to Fig. 4. It should be noted that a method is also possible in which, considering changes in the dynamic friction coefficient of the clutch 8, the dynamic friction coefficient $\mu$ is calculated from the difference between the RPM (engine speed) of the flywheel 300 and the speed of the input shaft 41, and from the calculated dynamic friction coefficient $\mu$ and constant k, the target clutch pressing load is determined in accordance with Expression (3), the clutch target position being calculated using a target pressing load-position conversion table (not shown).

A learning permission determining means 204 makes a determination as to whether or not to permit learning on the basis of the engine speed differential value calculated by the engine speed differential value operating means 202, and calculates a learning permission determination flag.

A clutch position learning means 205 calculates a clutch position learned value on the basis of the learning permission determination flag, which is calculated by the learning permission determining means 204, and the actual position of the clutch 8 detected by the clutch position sensor. It should be noted that the clutch position learned value may be calculated on the basis of the clutch target position calculated by the clutch target position operating means 203.

A clutch transmission torque learning means 206 calculates a clutch transmission torque learned value on the basis of the learning permission determination flag, which is calculated by the leaning permission determining means 204, and the engine torque estimated value estimated by the engine torque estimating means 201.

While the learning permission determination flag calculated by the learning permission determining means 204 is used for computing the learned value in each of the clutch position leaning means 205 and the clutch transmission torque learning means 206, instead of the learning permission determination flag, it is also possible to use the engine speed differential value for calculating the learned value.

Further, as required, it is also possible to omit one of the clutch position learning means 205 and the clutch transmission torque learning means 206.

A clutch characteristic correcting means 207 determines a clutch characteristic correction value on the basis of the clutch position learned value calculated by the clutch position learning means 205 and the clutch transmission torque learned value calculated by the clutch transmission torque learning means 206, and corrects the clutch characteristics stored in the power train control unit 100 such as the target torque-position conversion table or target pressing load-position conversion table in the clutch target position operating means 203.

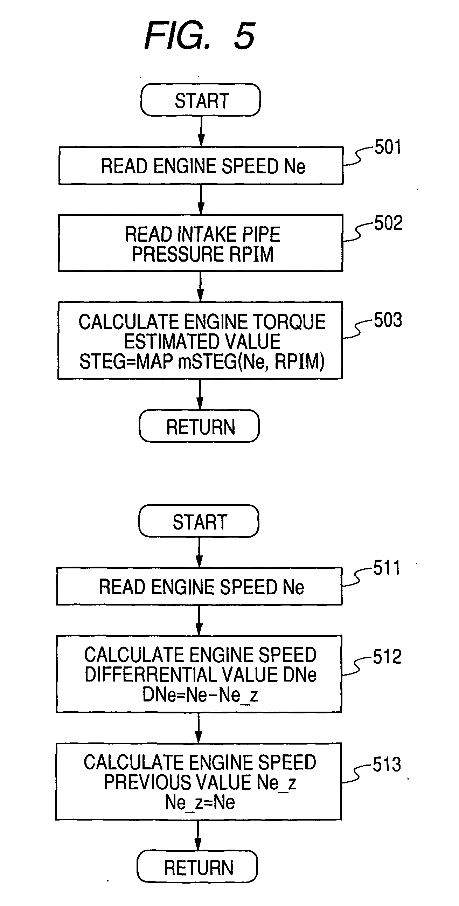

The upper diagram of Fig. 5 is a flowchart showing the contents of processing performed by the engine torque estimating means 201. In Process 501, an engine speed Ne is read. Then, in Process 502, an intake pipe pressure RPIM is read. Next, in Process 503, on the basis of the engine speed Ne and the intake pipe pressure RPIM read in Processes 501 and 502, respectively, an engine torque estimated value STEG is calculated by searching a map mSTEG stored in the power train control unit 100.

The lower diagram of Fig. 5 is a flowchart showing the contents of processing performed by the engine speed differential value operating means 202. In Process 511, the engine speed Ne is read. Then, in Process 512, on the basis of the engine speed Ne read in Process 511 and a previous engine speed value Ne_z, an engine speed differential value DNe is calculated in accordance with Expression (4).

$$DNe = Ne - Ne\_z \dots \quad (4)$$

It should be noted that Expression (4) may be changed depending on the measurement error of the engine speed. For example, when the computation period of the control unit is short and hence the influence of the engine speed measurement error is large, such a calculation method as to absorb the influence of the measurement error is employed, by determining the engine speed differential value DNe on the basis of the difference between the current engine speed Ne and the engine speed Ne_z (n) of n times ago.

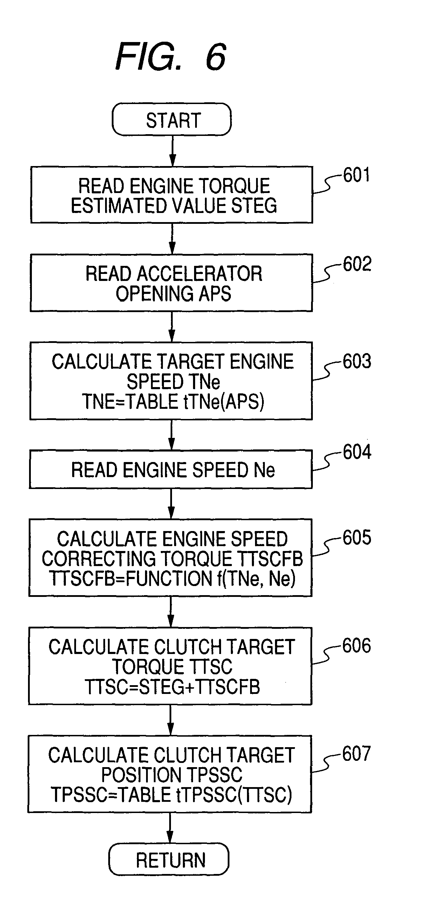

Fig. 6 is a flowchart showing the contents of processing performed by the clutch target position operating means 203. In Process 601, the engine torque estimatedvalue STEG calculated by the engine torque estimating means 201 is read. Then, in Process 602, an accelerator opening APS detected from the accelerator opening sensor is read. Next, in Process 603, on the basis of the accelerator opening read in Process 602, a target engine speed TNe is calculated by searching a table tTNe stored in the power train control unit 100. Next, in Process 604, the engine speed Ne is read. Next, in Process 605, on the basis of the target engine speed TNe calculated in Process 603 and the engine speed Ne read in Process 604, an engine speed correcting torque TTSCFB is calculated from a function f. A common example of the function f is an engine speed feedback control in which the engine speed correcting torque TTSCFB is determined in accordance with the difference between the target engine speed TNe and the engine speed Ne. Next, in Process 606, on the basis of the engine torque estimated value STEG read in Process 601 and the engine speed correcting torque TTSCFB calculated in Process 605, a clutch target torque TTSC is calculated in accordance with Expression (5).

$$TTSC = STEG + TTSCFB \dots \quad (5)$$

Next, in Process 607, on the basis of the clutch target torque TTSC calculated in Process 606, a clutch target position TPSSC is calculated by searching a table tTPSSC stored in the power train control unit 100.

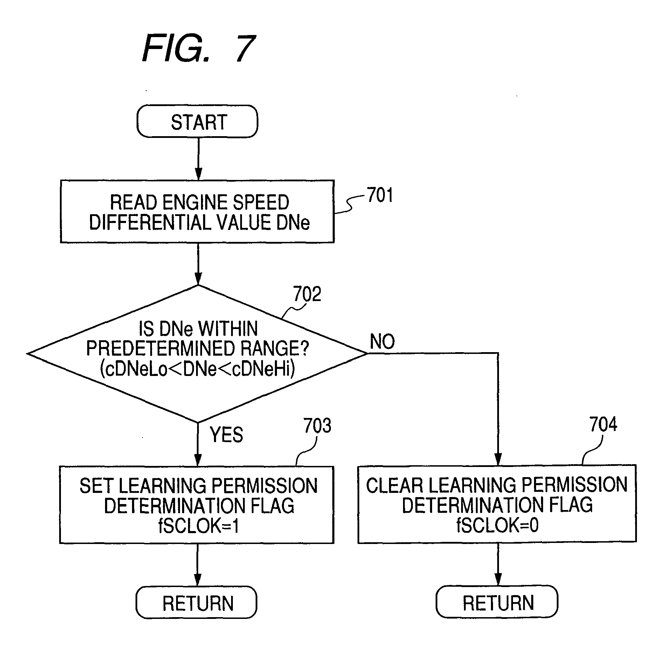

Fig. 7 is a flowchart showing the contents of processing performed by the learning permission determining means 204. In Process 701, the engine speed differential value DNe calculated by the engine speed differential value operating means 202 is read. Next, in Process 702, on the basis of the engine speed differential value DNe read in Process 701, a determination is made as to whether or not the engine speed differential value DNe ≅ 0 (zero) in accordance with Expression (6).

7

$$cDNeLo < DNe < cDNeHi \ldots \quad (6)$$

Here, cDNeLo and cDNeHi are each a constant stored in the power train control unit 100. cDNeLo is a negative value in the vicinity of zero, and cDNeHi is a positive value in the vicinity of zero. If the engine speed differential value DNe satisfies Expression (6), the processing advances to Process 703 where the setting processing (fSCLOK = 1) for a learning permission determination flag fSCLOK is performed. If the engine speed differential value DNe does not satisfy Expression (6), the processing advances to Process 704 where clearing processing (fSCLOK = 0 (zero)) for the learning permission determination flag fSCLOK is performed.

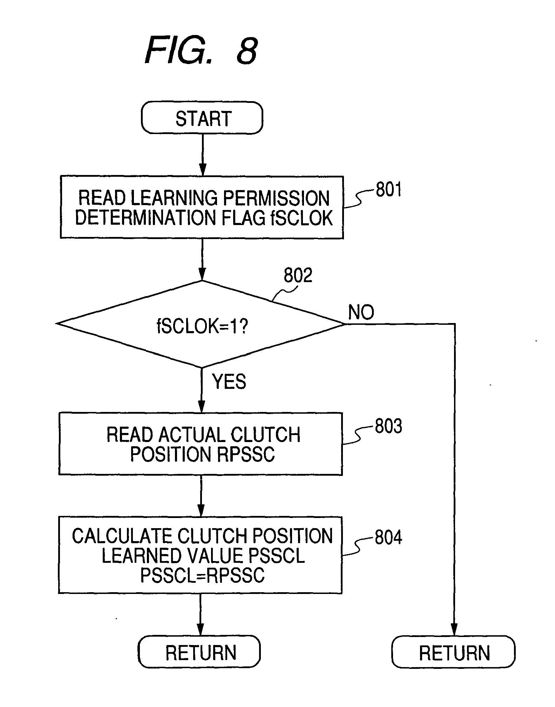

Fig. 8 is a flowchart showing the contents of processing performed by the clutch position learning means 205. In Process 801, the learning permission determination flag fSCLOK calculated by the learning permission determining means 204 is read. Next, in Process 802, it is determined whether or not the learning permission determination flag fSCLOK is set. If the learning permission determination flag fSCLOK is set, the processing advances to Process 803, and if the learning permission determination flag fSCLOK is not set, the processing is ended. In Process 803, an actual clutch position RPSSC detected by the clutch position sensor is read. Next, in Process 804, on the basis of the actual clutch position RPSSC read in Process 803, a clutch position learned value PSSCL is learned in accordance with Expression (7).

$$PSSCL = RPSSC \ldots \quad (7)$$

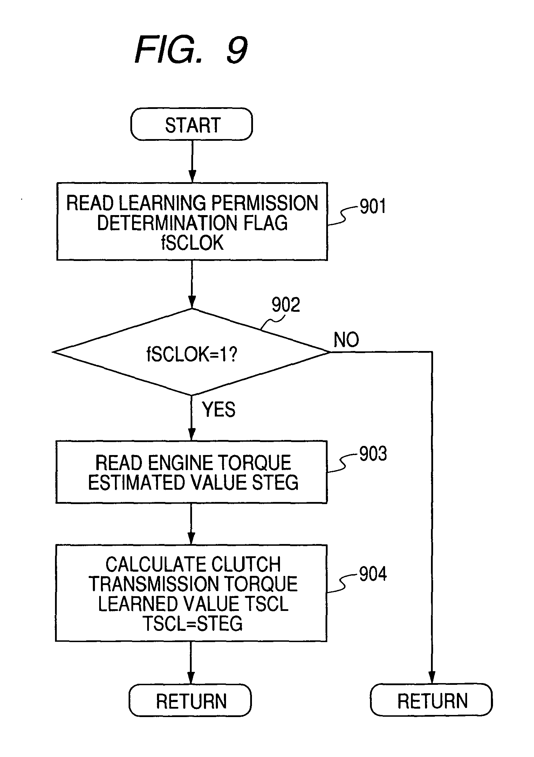

Fig. 9 is a flowchart showing the contents of processing performed by the clutch transmission torque learning means 206. In Process 901, the learning permission determination flag fSCLOK calculated by the learning permission determining means 204 is read. Next, in Process 902, it is determined whether or not the learning permission determination flag fSCLOK is set. If the learning permission determination flag fSCLOK is set, the processing advances to Process 903, and if the learning permission determination flag fSCLOK is not set, the processing is ended. In Process 903, the engine torque estimated value STEG estimated by the engine torque estimating means 201 is read. Next, in Process 904, on the basis of the engine torque estimated value STEG read in Process 903, a clutch transmission torque learned value TSCL is learned in accordance with Expression (8).

$$TSCL = STEG \ldots \quad (8)$$

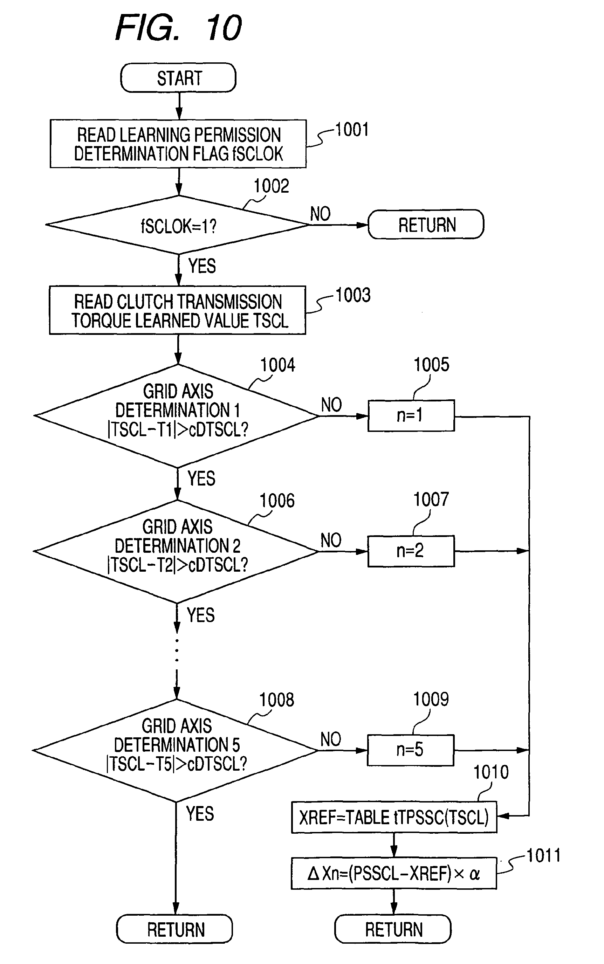

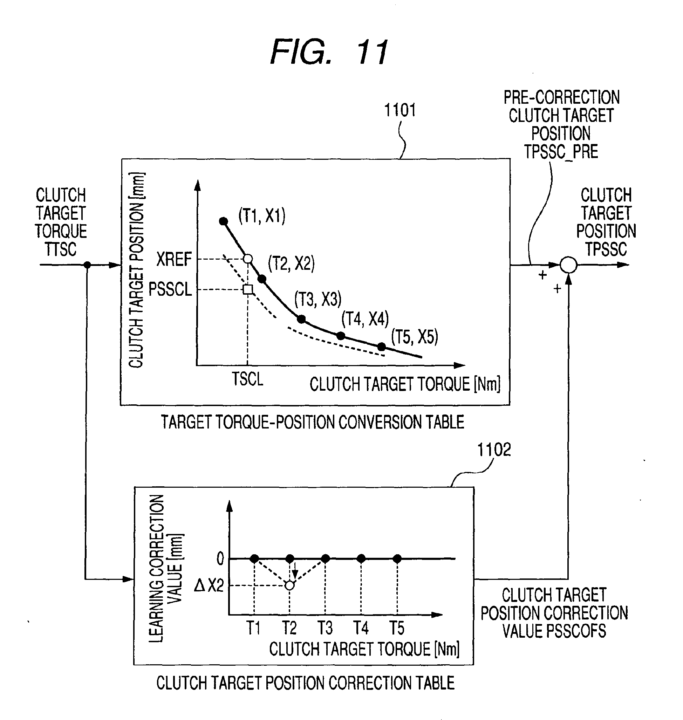

Next, referring to Figs. 10, 11, the clutch characteristic correcting means 207 will be described.

Fig. 10 is a flowchart showing the contents of processing performed by the clutch characteristic correcting means 207. In Process 1001, the learning permission determination flag fSCLOK calculated by the learning permission determining means 204 is read. Next, in Process 1002, it is determined whether or not the learning permission determination flag fSCLOK is set. If the learning permission determination flag fSCLOK is set, the processing advances to Process 1003, and if the learning permission determination flag fSCLOK is not set, the processing is ended. In Process 1003, the clutch transmission torque learned value calculated by the clutch transmission torque learning means 206 is read. Next, in each of Processes 1004 to 1008, a grid axis determination for determining to which of the grids indicated at T1 to T5 of a target torque-position conversion table shown in the upper diagram of Fig. 11 the clutch transmission torque learned value TSCL read in Process 1003 corresponds. First, in Process 1004, it is determined in accordance with Expression (9) that the clutch transmission torque learned value TSCL is not in the vicinity of the grid T1.

$$|TSCL - T1| > cDTSCL \ldots (9)$$

Here, the constant cDTSCL represents torque, which is desirably a small value within the estimation error range of the engine torque estimated value. If Expression (9) is satisfied, it is determined that the clutch transmission torque learned value TSCL is not present in the vicinity of the grid T1, and the processing advances to Process 1006. If Expression (9) is not satisfied, it is determined that the clutch transmission torque learned value TSCL is present in the vicinity of the grid T1, and 1 is substituted into the grid number n in Process 1005. The processing then advances to Process 1010. In Process 1006, it is determined in accordance with Expression (10) that the clutch transmission torque learned value TSCL is not present in the vicinity of the grid T2.

$$|\text{TSCL} - \text{T2}| > \text{cDTSCL} \dots (10)$$

If Expression (10) is satisfied, it is determined that the clutch transmission torque learned value TSCL is not present in the vicinity of the grid T2, and the processing advances to grid axis determination 3 (not shown). If Expression (10) is not satisfied, it is determined that the clutch transmission torque learned value TSCL is present in the vicinity of the grid T2, and 2 is substituted into the grid number n in Process 1007. The processing then advances to Process 1010. Thereafter, up to the grids T3 and T4, grid axis determination is performed in the same manner for the grids T1 and T2, and lastly, grid determination is performed with respect to the grid T5. In Process 1006, it is determined in accordance with Expression (10) that the clutch transmission torque learned value TSCL is not present in the vicinity of the grid T5.

$$|\text{TSCL} - \text{T5}| > \text{cDTSCL} \dots (11)$$

If Expression (11) is satisfied, it is determined that the clutch transmission torque learned value TSCL is not present in the vicinity of the grid T5, and the processing is ended because the clutch transmission torque learned value TSCL is not present in the vicinity of any of the grids T1 to T5. If Expression (11) is not satisfied, it is determined that the clutch transmission torque learned value TSCL is present in the vicinity of the grid T5, and 5 is substituted into the grid number n in Process 1009. The processing then advances to Process 1010. In Process 1010, a position XREF in the target torque-position conversion table corresponding to the clutch transmission torque learned value TSCL is calculated by searching the table tTPSSC stored in the power train control unit 100 on the basis of the clutch transmission torque learned value TSCL. Next, in Process 1011, the clutch position learned value PSSCL learned by the clutch position learning means 205 is read. Then, on the basis of the clutch position learned value PSSCL, a learning correction value $\Delta$Xn in the n-th grid is calculated in accordance with Expression (12).

$$\Delta\text{Xn} = (\text{PSSCL} - \text{XREF}) \times \alpha \dots (12)$$

Here, $\alpha$ is a weighting factor for calculating the learning correction value $\Delta$Xn. The degree of learning correction can be changed by adjusting the weighting factor $\alpha$. For example, when significant correction needs to be made to the clutch characteristics due to cross-machine variations at the time of shipping or the like, it is desirable that the clutch characteristics be quickly corrected by setting the weighting factor $\alpha$ to a large value. Further, when, due to wear of the clutch or the like, there is a need to correct the clutch characteristics little by little, it is desirable that the clutch characteristics be corrected gradually so that there is no abrupt change in start feeling by setting the weighting factor $\alpha$ to a small value.

Fig. 11 is a control block diagram showing a method of correcting clutch characteristics. Reference numeral 1101 denotes the target torque-position conversion table tTPSSC stored in the power train control unit 100. A pre-correction clutch target position TPSSC_PRE is calculated on the basis of the clutch target torque TTSC. Reference numeral 1102 denotes a clutch target position correction table tPSSCOFS, for which the same grid axes as those of the target torque-position conversion table tTPSSC are set. A clutch target position correction value PSSCOFS is calculated on the basis of the clutch target torque TTSC. The initial values of the clutch target position correction table tPSSCOFS are all zero; only when the learning correction value $\Delta$Xn is updated by the clutch characteristic correcting means 207 , the learning correction value $\Delta$Xn is added to the value of a predetermined grid axis. For example, when the clutch transmission torque leaned value TSCL is present in the vicinity of the grid T2, the learning correction value $\Delta$Xn is added to the value of the grid T2 of the clutch target position correction table tPSSCOFS. In the example shown in Fig. 11, as indicated by the dotted line in the target torque-position conversion table 1101, since it is considered that the characteristic when the clutch is worn shifts to the negative side, the learning correction value $\Delta$Xn also takes a negative value. The final clutch target position TPSSC is calculated by adding the clutch target position correction value PSSCOFS, which is calculated from the clutch target position correction table, to the pre-correction clutch target position TPSSC_PRE calculated from the target torque-position conversion table. Note that the clutch target position correction table PSSCOFS is stored in a backup RAM or the like in the power train control unit 100 so that the value of the clutch target position correction table PSSCOFS is not cleared by a backup power source in the power train control unit 100 even when the ignition switch is off.

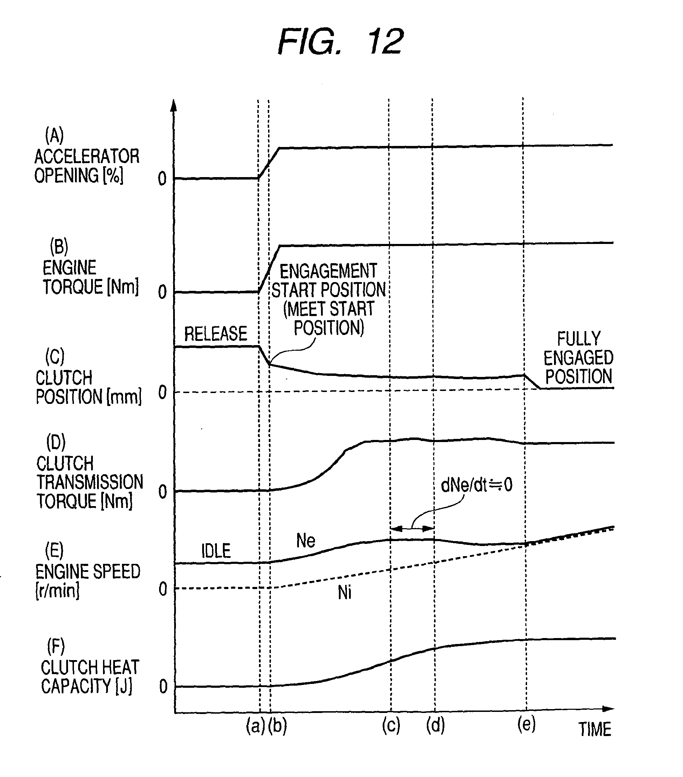

Next, referring to Fig. 12, a method of performing control at the time of vehicle start (hereinafter, "at start") will be described.

Fig. 12 is a time chart showing the characteristics at start. Fig. 12 shows, with respect to time taken along the horizontal axis, (A) accelerator opening, (B) engine torque, (C) clutch position, (D) clutch transmission torque, (E) engine speed, and (F) clutch heat capacity. When, at the point (a) in the drawing, the driver depresses the accelerator and start control is started, the engine 7 is controlled in accordance with the accelerator opening, and the engine torque increases. At this time, since the clutch target torque TTSC is calculated on the basis of the engine torque estimated value STEG and the above-described engine speed correcting torque, the clutch target torque TTSC gradually increases, so the clutch position is controlled toward the engaging direction. When, at the point (b) shown in the drawing, the clutch position passes the engagement start position (meet start position), an input shaft speed Ni indicated by the dotted line in the drawing begins to rise gradually, so the vehicle begins to propel forward. At this time, on the basis of the engine speed correcting torque, the engine speed Ne is controlled so as to become the target speed TNe set in accordance with the accelerator opening or the like. Thereafter, when the region (for example, the region between the point (c) and the point (d)) where $dNe/Dt \cong 0$ (zero) is detected by the engine speed differential value operating means 202, the clutch position and clutch transmission torque are learned through the above-described learning control, and the clutch characteristics are corrected on the basis of the obtained learned values. Thereafter, when the input shaft speed Ni continues to rise, and the engine speed Ne and the input shaft speed Ni become substantially equal to each other at the point (e) in the drawing, the clutch position is controlled up to the fully engaged position and thus the start control ends.

Next, referring to Fig, 13, description will be given of the effects that can be attained by employing the learning control according to the present invention.

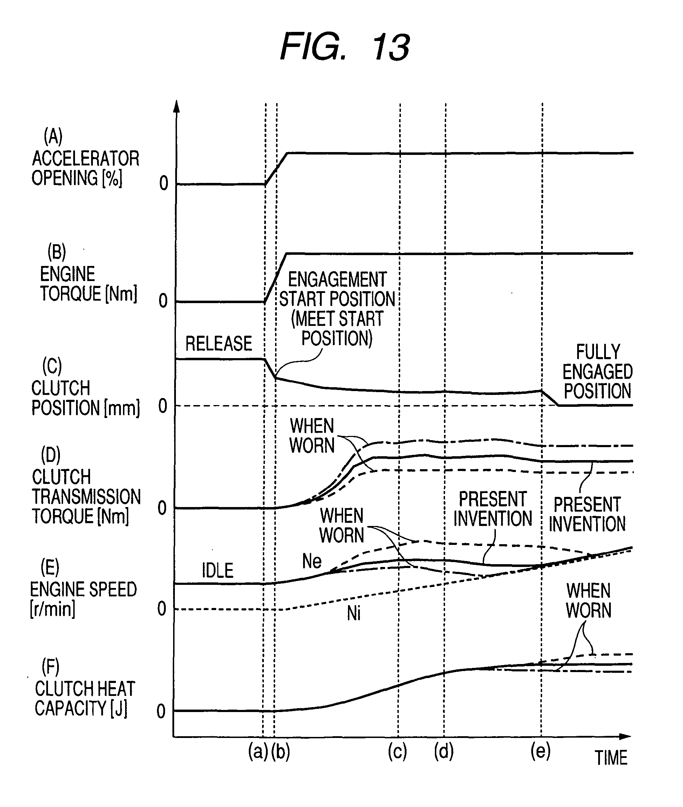

Like Fig. 12, Fig. 13 is a time chart showing the characteristics at start. While the horizontal and vertical axes of the time chart are the same as those of Fig. 12, the start characteristics when the clutch is worn are indicated by the broken lines and the alternate long and short dash lines in the drawing. Here, assuming that the characteristics indicated by the solid lines represent the characteristics when the clutch is new, the clutch transmission torque changes as indicated by the broken lines and the alternate long and short dash lines in the drawing. When the clutch transmission torque becomes comparatively smaller than that when the clutch is new (broken lines in the drawing), as indicated by the broken line in the drawing, the engine speed Ne tends to blow up as compared with the characteristic when the clutch is new, causing a deterioration in start feeling. Further, the clutch heat capacity also increases due to the elongated start control time, which also causes degradation of the clutch. Further, when the clutch transmission torque becomes comparatively larger than that when the clutch is new (alternate long and short dash line in the drawing), as indicated by the alternate long and short dash line in the drawing, the engine speed Ne decreases as compared with that when the clutch is new, causing a deterioration in start feeling. Further, since the engine Ne abruptly changes upon engagement of the clutch, inertia torque occurs in the engine, causing a clutch engagement shock.

As described above, when no learning control is employed, a deterioration in start feeling occurs due to cross-machine variations or degradation with time. However, by employing the learning control according to the present invention, the optimum clutch target position can be calculated with respect to the clutch target torque, whereby the same characteristics as those when the clutch is new (solid lines in the drawing) can be realized even when the clutch is worn to thereby prevent a deterioration in start feeling.

As described in the foregoing, by employing the learning control according to the present invention, correction of the clutch characteristics can be performed with good accuracy, thereby preventing a deterioration in start feeling. The present invention can be used in combination with the prior art techniques (the 2nd learning, the N learning, and the vehicle start position described above).

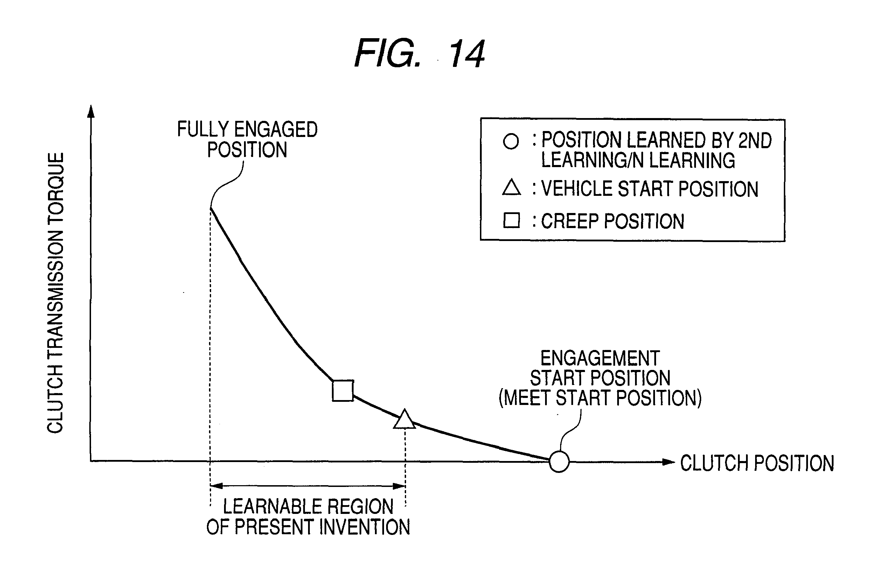

Next, referring to Fig. 14, the relationship between the clutch transmission torque and the clutch position in the learning control will be described.

Fig. 14 is a graph showing the relationship between the clutch transmission torque and the clutch position.

Here, as indicated by the mark 0 in Fig. 14, the clutch position learned by the 2nd learning or N learning as the prior art technique is present in the vicinity of the engagement start position (meet start position). Further, as can be appreciated from Expression (2), the clutch position learned through the learning of a vehicle start position as described in Japanese Patent Laid-Open No. Hll-132255 is a clutch position where the clutch transmission torque Tc = Rv (indicated by the mark $\Delta$ in the drawing). In the learning control according to the present invention, since learning of the clutch position and clutch transmission torque is performed under the condition where $dNe/dt \cong 0$ (zero), as shown in Fig. 14, it is possible to perform learning over a wide range. However, with the above-described learning, there is a fear that the start feeling may conversely deteriorate due to erroneous learning. In view of this, it is necessary to optimize the setting of the conditions for permitting learning and prohibit such learning control from being performed under conditions where erroneous learning may occur.

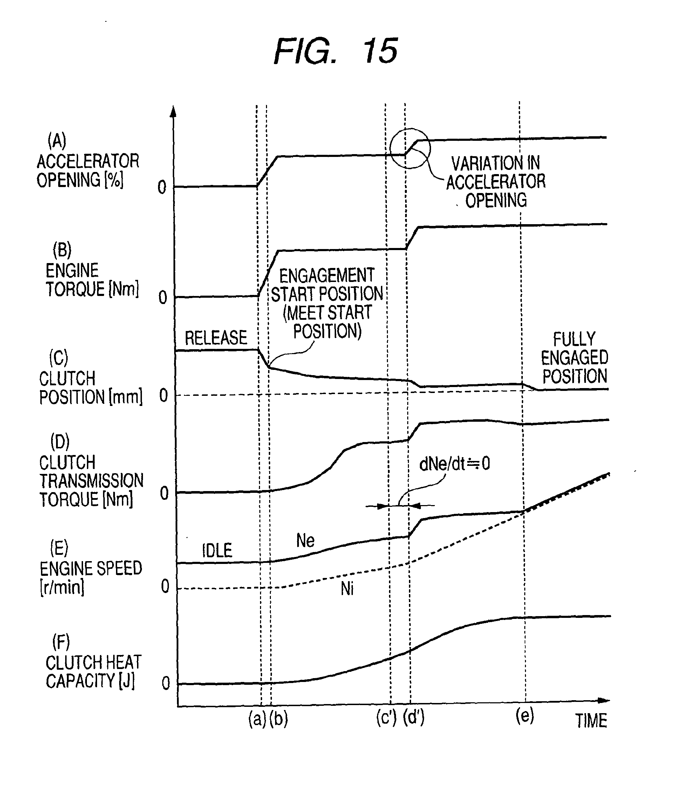

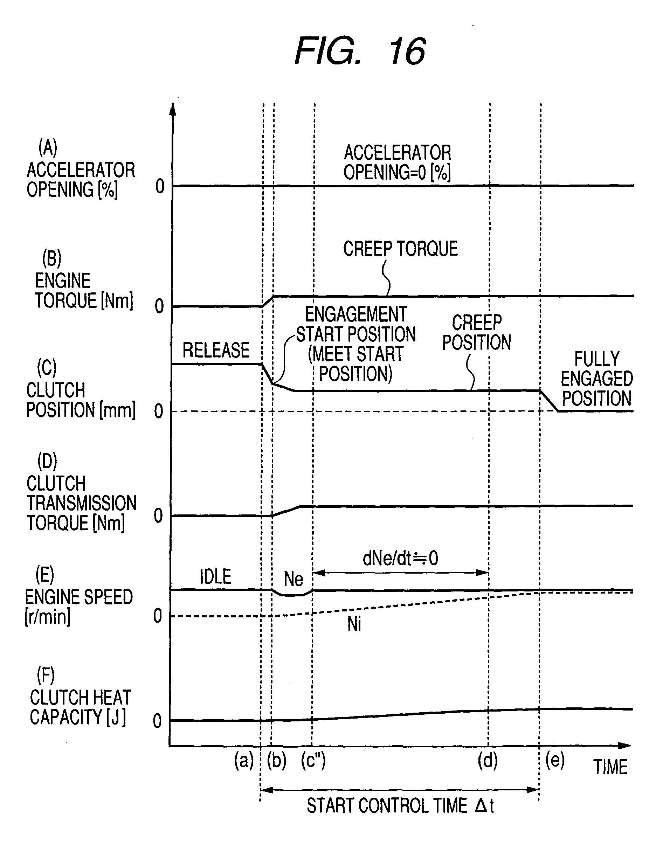

First, referring to Figs. 15 and 16, description will be given of the case where the accelerator opening varies.

Fig. 15 shows the characteristics at start in the case where the accelerator opening varies.

Like Fig. 12, Fig. 15 is a time chart showing the characteristics at start. While the horizontal and vertical axes of the time chart are the same as those of Fig. 12, the start characteristics in the case where the accelerator opening is varied by the driver when starting the vehicle are shown. When, at the point (a) in the drawing, the driver depresses the accelerator and the start control is started, the engine 7 is controlled in accordance with the accelerator opening, and the engine torque increases. At this time, since the clutch target torque TTSC is calculated on the basis of the engine torque estimated value STEG and the above-described engine speed correcting torque, the clutch target torque TTSC gradually increases, so the clutch position is controlled toward the engaging direction. When, at the point (b) shown in the drawing, the clutch position passes the engagement start position (meet start position), the input shaft speed Ni indicated by the dotted line in the drawing begins to rise gradually, so the vehicle begins to propel forward. At this time, on the basis of the engine speed correcting torque, the engine speed Ne is controlled so as to become the target speed TNe set in accordance with the accelerator opening or the like. However, when the accelerator is further depressed by the driver at the point (d') in the drawing, the engine torque further increases in accordance with the accelerator opening. Accordingly, the clutch target torque TTSC further increases, so the clutch position is further controlled toward the engaging direction. Since the target engine speed TNe is calculated in accordance with the increase in accelerator opening, the engine speed Ne further rises. Thus, the region where the engine speed differential value dNe/dt detected by the engine speed differential value operating means 202 becomes dNe/dt $\cong$ 0 (zero) becomes shorter than that in the case of Fig. 12. Since it is difficult to precisely calculate the differential value of the engine speed with conventional control units, as shown in Fig. 5, it is common to use a calculation method using pseudo-differentiation. Thus, when the region where dNe/dt $\cong$ 0 (zero) is short, since there is a possibility that erroneous learning may be performed depending on the computing accuracy of the differential value, it is desirable to perform setting of the conditions for permitting learning while taking into account variations in accelerator opening.

As an example, a method of learning the clutch position during creeping (accelerator opening = 0 (zero) [%]) will be described.

Fig. 16 shows the characteristics at start in the case where creep control is performed.

Like Fig. 12, Fig. 16 is a time chart showing the characteristics at start. While the horizontal and vertical axes of the time chart are the same as those of Fig. 12, the start characteristics during creeping (accelerator opening = 0 (zero) [%]) are shown. When, at the point (a) in the drawing, the driver releases the brake with the accelerator being off, the creep control (start control where accelerator opening = 0 (zero) [%]) is started. The engine 7 is controlled so as to become engine torque corresponding to creep torque, and the engine torque slightly increases. At this time, the clutch target torque TTSC also slightly increases in accordance with the engine torque, so the clutch position is controlled so as to be in the vicinity of the creep position. As in other start controls, when, at the point (b) shown in the drawing, the clutch position passes the engagement start position (meet start position), the input shaft speed Ni indicated by the dotted line in the drawing begins to rise gradually, so the vehicle begins to propel forward. At this time, on the basis of the engine speed correcting torque, the engine speedNe is controlled so as to become an idle speed (a predetermined value on the order of about 600 to 1000 [r/min]). At this time, the engine 7 is controlled so that the engine torque is maintained at the creep torque (value set in accordance with the vehicle weight, piston displacement, and the like), and the clutch target torque TTSC is calculated in accordance with the engine torque. Accordingly, after the engine speed converges to a target value on the order of the idle speed, the clutch position is maintained at a value (indicated by the mark □ in Fig. 14) for realizing clutch transmission torque equivalent to the creep torque. In this way, during creeping, since the engine speed Ne is controlled so as to be substantially constant, the region (the region between the point (c") and point (d") in the drawing) where dNe/dt detected by the engine speed differential value operating means 202 becomes dNe/dt $\cong$ 0 (zero) becomes longer than that in the case of Fig. 12. Thus, the possibility of erroneous learning decreases.

As described above, in order to prevent erroneous learning due to variations in accelerator opening, it is desirable to perform learning control when the accelerator opening is within a predetermined range during start control (for example, during creeping). Further, when the accelerator opening is constant within a predetermined range, the start control time $\Delta t$ shown in Fig. 16 becomes substantially constant for each accelerator opening. Accordingly, the clutch position may be corrected on the basis of the start control time $\Delta t$. For example, when the start control time $\Delta t$ is longer than the start control time default value $\Delta td$ that is set under the assumption that the clutch is new, this means that the clutch transmission torque has become small, so the clutch position is corrected toward the engaging side. Further, when the start control time $\Delta t$ is shorter than the start control time default value $\Delta td$, this means that the clutch transmission torque has become large, so the clutch position is corrected toward the releasing side.

Next, description will be given of a learning condition setting method that takes the temperature of the clutch friction into account.

With regard to the above-described clutch characteristics, since the friction characteristics change with respect to the temperature of the clutch friction surface, it is essential to perform setting of learning conditions in accordance with the clutch heat capacity. As an example, description will be given of a method in which the clutch heat capacity is estimated on the basis of the speed difference between the clutch target torque TTSC, the engine speed Ne, and the input shaft speed Ni, and the learning conditions are set in accordance with the clutch estimated heat capacity SQSC thus estimated. The clutch estimated heat capacity SQSC at start is represented by Expressions (13) and (14).

$$IQSC = TTSC \times (Ne - Ni) \times cRPMRAD \ldots (13)$$

$$SQSC(n) = SQSC(n - 1) + IQSC \times cKIQSC \ldots (14)$$

Here, IQSC represents clutch instantaneous heat capacity, and cRPMRAD is a coefficient for converting an speed [r/min] into an angular speed [rad/d]. Further, cKIQSC is an integral action coefficient determined on the basis of the computation period of the power train control unit 100. Assuming that the clutch estimated heat capacity at the previous start is SQSC_PRE and the time that has elapsed since the previous start is TMSTAPRE, the learning prohibition conditions set on the basis of the clutch estimated heat capacity SQSC are as represented by Expressions (15) and (16).

$$SQSC\_PRE > cSQSCLOK \ldots (15)$$

$$TMSTAPRE < cTMSCLOK \ldots (16)$$

Here, cSQSCLOK is a threshold for determining the heat capacity state of the clutch, and cTMSCLOK is a value set by estimating a period of time required until the clutch is cooled on the basis of the heat release characteristics of the clutch. The over-determination for the clutch heat capacity is made by Expression (15), and a determination as to whether or not the clutch is fully cooled by heat release is made by Expression (16). When at least one of Expressions (15) and (16) is satisfied, the above-described learning control is prohibited (Alternatively, the previous learned value may be maintained. The word "prohibit (prohibition)" as used herein in the description of all the embodiments can be replaced by the expression "maintain (maintaining of) the previous learned value). Further, since the temperature of the clutch friction surface decreases when the engine and transmission are in the cold states, it is essential to perform setting of learning conditions in accordance with the temperatures of the engine and transmission. As an example, description will be given of learning conditions based on engine coolant temperature TPEGC and transmission lubricating oil temperature TRATF.

$$TPEGC < cTPESCL \ldots (17)$$

$$TPATF < cTRASCL \ldots (18)$$

Here, cTPESCL is an engine coolant temperature threshold for determining the cold state of the engine. When Expression (17) is satisfied, the engine is determined to be in the cold state, and the above-described learning control is prohibited. Further, cTPESCL is a transmission lubricating temperature threshold for determining the cold state of the transmission. When Expression (18) is satisfied, the engine is determined to be in the cold state, and the above-described learning control is prohibited.

Furthermore, the above-described learning control must be prohibited also when an abnormality is detected in various sensors (the clutch position sensor, the accelerator opening sensor, the engine speed sensor, and the input shaft speed sensor). The same applies to the case where the battery voltage becomes a predetermined value or less.

Further, since learning is performed during start control in the learning control of the vehicle start position and in the learning control according to the present invention, it is necessary to prohibit the learning control when the driver operates the brake or parking brake during the start control. Assuming that the brake switch is BRKSW and the parking brake switch is SDBRKSW, a braking operation is determined to have been performed by the driver when either of Expressions (19) and (20) is satisfied, and the above learning control is prohibited.

$$BRKSW = 1 \dots (19)$$

$$SDBRKSW = 1 \dots (20)$$

Note that when the brake depression force is detected by a brake depression force sensor, instead of the brake switch, a determination based on the brake depression force may be made.

Alternatively, in the case where, as in the embodiment described with reference to Fig. 1, the controller has the engine control unit 101 for controlling the engine 7, and the actuator control unit 104 for controlling the clutch 8, with a communication means being provided between the engine control unit and the actuator control unit, the above-described learning control is prohibited when an abnormality in the communication means is detected. This method makes it possible to prevent erroneous learning due to an abnormality in communication.

While Fig. 1 shows a 6-speed forward gear-type transmission as an embodiment of the present invention, the transmission may be equipped with reverse speeds, and the number of speeds may be changed in accordance with the specifications of a vehicle type to which the present invention is applied. Further, the transmission used may be a continuously variable transmission (such as a belt-type CVT or troidal type CVT) or a twin clutch type transmission in which the transmission line from the engine to the tires is split in two.

As described above, when the engine speed differential value is within a predetermined range, the clutch position is learned, and the transmission torque of the clutch is learned on the basis of the engine torque estimated value, the relationship between the clutch position and the clutch transmission torque can be grasped without mounting a sensor for detecting the road surface condition, the vehicle weight, or the like, thereby making it possible to avoid an increase in cost.

Further, by correcting the clutch characteristics on the basis of the clutch position learned value and the clutch transmission torque learned value thus learned, and calculating the target position for the clutch on the basis of the clutch characteristics, it is possible to prevent a deterioration in start feeling due to cross-machine variations or degradation with time, and when the accelerator opening is within a predetermined range, the time it takes from brake-off to the engaging of the clutch can be converged to within a predetermined range through the correction of the clutch characteristics.

Further, by setting the conditions for the learning on the basis of the accelerator opening, the state of the clutch, the warm-up state of the engine/transmission, input signals from various sensors, and the communication state between control units, it is possible to prevent a deterioration in start feeling due to erroneous learning.

That is, according to the above-described embodiment, there is provided a controller for an automobile equipped with a transmission to which torque is transmitted from an engine via a clutch, including: an engine torque estimating means for estimating torque of the engine; an engine speed differential value operating means for computing a differential value of an engine speed on the basis of an speed of the engine; and a clutch target position operating means for computing a target position for the clutch on the basis of clutch characteristics; a clutch position learning means for learning a position of the clutch when an engine speed differential value calculated by the engine speed differential value operating means is within a predetermined range; a clutch transmission torque learning means for learning, when an engine speed differential value calculated by the engine speed differential value operating means is within a predetermined range, a transmission torque of the clutch on the basis of an engine torque estimated value estimated by the engine torque estimating means; and a clutch characteristic correctingmeans for correcting characteristics of the clutch on the basis of a clutch position learned value learned by the clutch position learning means and a clutch transmission torque learned value learned by the clutch transmission torque learning means.

Preferably, the learning of the clutch position by the clutch position learning means and the learning of the clutch transmission torque by the clutch transmission torque learning means are executed when an accelerator opening is within a predetermined value.

Preferably, the learning of the clutch position by the clutch position learning means and the learning of the clutch transmission torque by the clutch transmission torque learning means are prohibited when the heat capacity of the clutch is equal to or higher than a predetermined value.

Preferably, the learning of the clutch position by the clutch position learning means and the learning of the clutch transmission torque by the clutch transmission torque learning means are prohibited when the coolant temperature of the engine is equal to or lower than a predetermined value.

Preferably, the learning of the clutch position by the clutch position learning means and the learning of the clutch transmission torque by the clutch transmission torque learning means are prohibited when the lubricating oil temperature of the transmission is equal to or lower than a predetermined value.

Preferably, in the controller for an automobile to which a signal from a clutch position sensor for detecting a clutch position, a signal from an engine speed sensor for detecting an engine speed, and a signal from an accelerator opening sensor for detecting an accelerator opening are input, the learning of the clutch position by the clutch position learning means and the learning of the clutch transmission torque by the clutch transmission torque learning means are prohibited when an abnormality is detected in at least one of the input signals from the above sensors.

Preferably, in the controller for an automobile which is composed of a plurality of control units and includes a communication means provided between the plurality of control units, the learning of the clutch position by the clutch position learning means and the learning of the clutch transmission torque by the clutch transmission torque learning means are prohibited when an abnormality is detected in the communication means.

Further, according to the above-described embodiment, in the controller for an automobile, when the accelerator opening is within a predetermined range, a period of time from brake-off to the engaging of the clutch is converged to within a predetermined range by the clutch characteristic correcting means.

Further, according to the above-described embodiment, there is provided a method of controlling an automobile equipped with a transmission to which torque is transmitted from an engine via a clutch, including estimating the torque of the engine, calculating a differential value of an engine speed on the basis of an speed of the engine, and calculating a target position for the clutch on the basis of clutch characteristics, wherein when an engine speed differential value is within a predetermined range, a position of the clutch is learned and transmission torque of the clutch is learned on the basis of an engine torque estimated value, the clutch characteristics being corrected on the basis of a clutch position learned value and a clutch transmission torque learned value thus learned.

Preferably, when an accelerator opening is within a predetermined range, a period of time from brake-off to the engaging of the clutch is converged to within a predetermined range through correction of the clutch characteristics.

Accordingly, the relationship between the clutch position and the transmission torque can be grasped without mounting a sensor for detecting the road surface condition, vehicle weight, or the like, thereby making it possible to avoid an increase in cost.

**Claims**

1. A controller for an automobile comprising a transmission to which torque is transmitted from an engine via a clutch, comprising:

    learning means for learning a position and/or transmission torque of the clutch when a differential value of an engine speed is within a predetermined range;
    clutch target position operating means for operating a target position for the clutch on the basis of the learned position and/or transmission torque of the clutch; and
    clutch controlling means for controlling the clutch on the basis of the target position.

2. The controller for an automobile according to Claim 1, wherein learning of the position and/or transmission torque of the clutch by the learning means is performed when an accelerator opening is within a predetermined range.

3. The controller for an automobile according to Claim 1, wherein learning of the position and/or transmission torque of the clutch by the learning means is prohibited or a previous learned value is maintained when a heat capacity of the clutch is equal to or higher than a predetermined value.

4. The controller for an automobile according to Claim 1, wherein learning of the position and/or transmission torque of the clutch by the learning means is prohibited or a previous learned value is maintained when a coolant temperature of the engine is equal to or lower than a predetermined value.

5. The controller for an automobile according to Claim 1, wherein learning of the position and/or transmission torque of the clutch by the learning means is prohibited or a previous learned value is maintained when a lubricating oil temperature of the transmission is equal to or lower than a predetermined value.

6. The controller for an automobile according to Claim 1, wherein:

    the learning means is input with a signal from at least one of a clutch position sensor for detecting a clutch position, an engine speed sensor for detecting an engine speed, and an accelerator opening sensor for detecting an accelerator opening; and
    learning of the position and/or transmission torque of the clutch is prohibited or a previous learned value is maintained when an abnormality is detected in the sensor or in an input signal from the sensor.

7. The controller for an automobile according to Claim 1,
   wherein: the controller includes a plurality of control units each having a communication means; and
   learning of the position and/or transmission torque of the clutch is prohibited or a previous learned value is maintained when an abnormality is detected in the communication means.

8. The controller for an automobile according to Claim 1, wherein when an accelerator opening is within a predetermined range, a period of time from brake off to engagement of the clutch is converted to within a predetermined range.

9. A driving force transmission system for an automobile comprising a clutch provided between an engine and a transmission, and a controller for controlling the clutch,
   wherein the controller comprising:

   learning means for learning a position and/or transmission torque of the clutch when a differential value of an engine speed is within a predetermined range, and
   clutch target position operating means for operating a target position for the clutch on the basis of the learned position and/or transmission torque of the clutch; and
   clutch controlling means for controlling the clutch in its position on the basis of the target position.

10. The driving force transmission system for an automobile according to Claim 9, wherein the controller performs the learning means learning of the position and/or transmission torque of the clutch when an accelerator opening is within a predetermined range.

11. The driving force transmission system for an automobile according to Claim 9, wherein the controller prohibits the learning means learning of the position and/or transmission torque of the clutch or maintains a previous learned value when a heat capacity of the clutch is equal to or higher than a predetermined value.

12. The driving force transmission system for an automobile according to Claim 9, wherein the controller prohibits the learning means learning of the position and/or transmission torque of the clutch or maintains a previous learned value when a coolant temperature of the engine is equal to or lower than a predetermined value.

13. The driving force transmission system for an automobile according to Claim 9, wherein the controller prohibits the learning means learning of the position and/or transmission torque of the clutch or maintains a previous learned value when a lubricating oil temperature of the transmission is equal to or lower than a predetermined value.

14. The driving force transmission system for an automobile according to Claim 9, wherein the controller is input with a signal from at least one of a clutch position sensor for detecting a clutch position, an engine speed sensor for detecting an engine speed, and an accelerator opening sensor for detecting an accelerator opening, and prohibits learning of the position and/or transmission torque of the clutch or maintains a previous learned value when an abnormality is detected in the sensor or in an input signal from the sensor.

15. The driving force transmission system for an automobile according to Claim 9,
    wherein: the controller includes a plurality of control units each having a communication means; and
    the controller prohibits learning of the position and/or transmission torque of the clutch or maintains a previous learned value when an abnormality is detected in the communication means.

16. The driving force transmission system for an automobile according to Claim 9, wherein when an accelerator opening is within a predetermined range, a period of time from brake off to engagement of the clutch is converged to within a predetermined range.

17. An automobile comprising an engine, a transmission to which torque is transmitted from the engine via a clutch, and a controller connected to the engine and the clutch,
    wherein: a speed signal of the engine and a position signal of the clutch are input to the controller;
    when a differential value of the input speed signal is within a predetermined range, the controller learns a position of the clutch from the position signal and/or learns a transmission torque of the clutch from an estimated torque of the engine, and outputs a target position signal of the clutch on the basis of the learned position and/or transmission torque of the clutch; and

the position of the clutch is controlled by the target position signal.

# FIG. 1

# FIG. 2

100

EP 1 688 635 A1

# FIG. 3

# FIG. 4

DIAPHRAGM SPRING
CHARACTERISTIC

FULLY ENGAGED
POSITION

CLUTCH PRESSING LOAD

—— : WHEN NEW
----- : WHEN WORN

ENGAGEMENT START POSITION
(MEET START POSITION)

CLUTCH POSITION

FULLY ENGAGED
POSITION

CLUTCH TRANSMISSION TORQUE

—— : WHEN NEW
----- : WHEN WORN

ENGAGEMENT START POSITION
(MEET START POSITION)

CLUTCH POSITION

# FIG. 5

START

READ ENGINE SPEED Ne — 501

READ INTAKE PIPE
PRESSURE RPIM — 502

CALCULATE ENGINE TORQUE
ESTIMATED VALUE
STEG=MAP mSTEG(Ne, RPIM) — 503

RETURN

START

READ ENGINE SPEED Ne — 511

CALCULATE ENGINE SPEED
DIFFERRENTIAL VALUE DNe
DNe=Ne-Ne_z — 512

CALCULATE ENGINE SPEED
PREVIOUS VALUE Ne_z
Ne_z=Ne — 513

RETURN

## FIG. 6

```
                    ┌─────────────┐
                    │   START     │
                    └──────┬──────┘
                           │
                           ▼
        ┌──────────────────────────────────┐
        │     READ ENGINE TORQUE           │ ⌐601
        │     ESTIMATED VALUE STEG         │
        └──────────────┬───────────────────┘
                       │
                       ▼
        ┌──────────────────────────────────┐
        │     READ ACCELERATOR             │ ⌐602
        │     OPENING APS                  │
        └──────────────┬───────────────────┘
                       │
                       ▼
        ┌──────────────────────────────────┐
        │   CALCULATE TARGET ENGINE        │ ⌐603
        │         SPEED TNe                │
        │   TNE=TABLE tTNe(APS)            │
        └──────────────┬───────────────────┘
                       │
                       ▼
        ┌──────────────────────────────────┐
        │     READ ENGINE SPEED Ne         │ ⌐604
        └──────────────┬───────────────────┘
                       │
                       ▼
        ┌──────────────────────────────────┐
        │   CALCULATE ENGINE SPEED         │ ⌐605
        │   CORRECTING TORQUE TTSCFB       │
        │   TTSCFB=FUNCTION f(TNe, Ne)     │
        └──────────────┬───────────────────┘
                       │
                       ▼
        ┌──────────────────────────────────┐
        │   CALCULATE CLUTCH TARGET        │ ⌐606
        │         TORQUE TTSC              │
        │   TTSC=STEG+TTSCFB               │
        └──────────────┬───────────────────┘
                       │
                       ▼
        ┌──────────────────────────────────┐
        │   CALCULATE CLUTCH TARGET        │ ⌐607
        │      POSITION TPSSC              │
        │   TPSSC=TABLE tTPSSC(TTSC)       │
        └──────────────┬───────────────────┘
                       │
                       ▼
                ┌─────────────┐
                │   RETURN    │
                └─────────────┘
```

# FIG. 7

```
              ┌─────────────┐
              │    START    │
              └─────────────┘
                     │
                     ▼
        ┌───────────────────────────┐
        │    READ ENGINE SPEED      │─── 701
        │  DIFFERENTIAL VALUE DNe   │
        └───────────────────────────┘
                     │
                     ▼
                 ╱───────╲         702
               ╱  IS DNe   ╲
             ╱  WITHIN       ╲
            ◇ PREDETERMINED   ◇──── NO ──────────┐
             ╲  RANGE?        ╱                   │
               ╲(cDNeLo<DNe<cDNeHi)             │
                 ╲───────╱                       │
                     │ YES    703                │        704
                     ▼                           ▼
        ┌───────────────────────────┐  ┌───────────────────────────┐
        │  SET LEARNING PERMISSION  │  │ CLEAR LEARNING PERMISSION │
        │    DETERMINATION FLAG     │  │    DETERMINATION FLAG     │
        │       fSCLOK=1            │  │       fSCLOK=0            │
        └───────────────────────────┘  └───────────────────────────┘
                     │                           │
                     ▼                           ▼
              ┌─────────────┐            ┌─────────────┐
              │   RETURN    │            │   RETURN    │
              └─────────────┘            └─────────────┘
```

# FIG. 8

```
        ┌─────────────┐
        │    START    │
        └─────────────┘
               │
               ▼
   ┌───────────────────────────┐
   │ READ LEARNING PERMISSION  │  ─801
   │ DETERMINATION FLAG fSCLOK │
   └───────────────────────────┘
               │
               ▼
          ◇─────────◇           802
       ◇               ◇
     ◇                   ◇        NO
    ◇    fSCLOK=1?         ◇ ──────────────┐
     ◇                   ◇                 │
       ◇               ◇                   │
          ◇─────────◇                      │
               │                           │
              YES                          │
               │                           │
               ▼                           │
   ┌───────────────────────────┐           │
   │     READ ACTUAL CLUTCH    │  ─803      │
   │      POSITION RPSSC       │            │
   └───────────────────────────┘           │
               │                           │
               ▼                           │
   ┌───────────────────────────┐           │
   │ CALCULATE CLUTCH POSITION │  ─804      │
   │  LEARNED VALUE PSSCL      │            │
   │      PSSCL=RPSSC          │            │
   └───────────────────────────┘           │
               │                           │
               ▼                           ▼
        ┌─────────────┐            ┌─────────────┐
        │   RETURN    │            │   RETURN    │
        └─────────────┘            └─────────────┘
```

# FIG. 9

```
        ┌─────────────┐
        │    START    │
        └─────────────┘
               │
               ▼
   ┌────────────────────────┐
   │ READ LEARNING PERMISSION│  ─901
   │  DETERMINATION FLAG     │
   │       fSCLOK            │
   └────────────────────────┘
               │
               ▼
            ╱╲  902
          ╱      ╲          NO
        ╱ fSCLOK=1? ╲ ──────────────┐
          ╲      ╱                   │
            ╲  ╱                     │
             │                       │
            YES                      │
             ▼                       │
   ┌────────────────────┐           │
   │  READ ENGINE TORQUE │  ─903     │
   │ ESTIMATED VALUE STEG│           │
   └────────────────────┘           │
             │                       │
             ▼                       │
   ┌────────────────────┐           │
   │ CALCULATE CLUTCH    │  ─904     │
   │ TRANSMISSION TORQUE │           │
   │ LEARNED VALUE TSCL  │           │
   │     TSCL=STEG       │           │
   └────────────────────┘           │
             │                       │
             ▼                       ▼
       ┌──────────┐           ┌──────────┐
       │  RETURN  │           │  RETURN  │
       └──────────┘           └──────────┘
```

# FIG. 10

START

READ LEARNING PERMISSION DETERMINATION FLAG fSCLOK — 1001

1002

fSCLOK=1? — NO → RETURN

YES

READ CLUTCH TRANSMISSION TORQUE LEARNED VALUE TSCL — 1003

1004

GRID AXIS DETERMINATION 1 $|TSCL-T1|>cDTSCL$? — NO → 1005 $n=1$

YES

1006

GRID AXIS DETERMINATION 2 $|TSCL-T2|>cDTSCL$? — NO → 1007 $n=2$

YES

1008

GRID AXIS DETERMINATION 5 $|TSCL-T5|>cDTSCL$? — NO → 1009 $n=5$

YES

1010

XREF=TABLE tTPSSC(TSCL)

$\Delta Xn=(PSSCL-XREF)\times \alpha$ — 1011

RETURN          RETURN

# FIG. 11

1101

PRE-CORRECTION
CLUTCH TARGET
POSITION
TPSSC_PRE

CLUTCH
TARGET
TORQUE
TTSC

CLUTCH TARGET POSITION [mm]

XREF

PSSCL

(T1, X1)

(T2, X2)

(T3, X3)

(T4, X4)

(T5, X5)

TSCL CLUTCH TARGET TORQUE [Nm]

TARGET TORQUE-POSITION CONVERSION TABLE

CLUTCH
TARGET
POSITION
TPSSC

1102

LEARNING CORRECTION VALUE [mm]

0

ΔX2

T1 T2 T3 T4 T5
CLUTCH TARGET TORQUE [Nm]

CLUTCH TARGET POSITION CORRECTION TABLE

CLUTCH TARGET
POSITION CORRECTION
VALUE PSSCOFS

27

# FIG. 12

(A)
ACCELERATOR
OPENING [%]

(B)
ENGINE
TORQUE [Nm]

ENGAGEMENT
START POSITION
(MEET START
POSITION)

RELEASE

(C)
CLUTCH
POSITION [mm]

FULLY
ENGAGED
POSITION

(D)
CLUTCH
TRANSMISSION
TORQUE [Nm]

$dNe/dt \fallingdotseq 0$

(E)
ENGINE SPEED
[r/min]

IDLE          Ne

Ni

(F)
CLUTCH HEAT
CAPACITY [J]

(a)(b)          (c)  (d)          (e)    TIME

# FIG. 13

(A)
ACCELERATOR
OPENING [%]    0

(B)
ENGINE
TORQUE [Nm]    0

(C)
CLUTCH
POSITION [mm]    0

RELEASE

ENGAGEMENT
START POSITION
(MEET START
POSITION)

FULLY
ENGAGED
POSITION

(D)
CLUTCH
TRANSMISSION
TORQUE [Nm]    0

WHEN
WORN

PRESENT
INVENTION

PRESENT
INVENTION

(E)
ENGINE SPEED
[r/min]    0

IDLE

Ne

WHEN
WORN

Ni

WHEN
WORN

(F)
CLUTCH HEAT
CAPACITY [J]    0

(a)(b)        (c)   (d)        (e)    TIME

# FIG. 14

FULLY ENGAGED
POSITION

CLUTCH TRANSMISSION TORQUE

○ : POSITION LEARNED BY 2ND
     LEARNING/N LEARNING
△ : VEHICLE START POSITION
□ : CREEP POSITION

ENGAGEMENT
START POSITION
(MEET START POSITION)

CLUTCH POSITION

LEARNABLE REGION
OF PRESENT INVENTION

EP 1 688 635 A1

# FIG. 15

(A) ACCELERATOR OPENING [%]

(B) ENGINE TORQUE [Nm]

(C) CLUTCH POSITION [mm]

(D) CLUTCH TRANSMISSION TORQUE [Nm]

(E) ENGINE SPEED [r/min]

(F) CLUTCH HEAT CAPACITY [J]

VARIATION IN ACCELERATOR OPENING

ENGAGEMENT START POSITION (MEET START POSITION)

RELEASE

FULLY ENGAGED POSITION

$dNe/dt \fallingdotseq 0$

IDLE

Ne

Ni

(a) (b) (c') (d') (e) TIME

# FIG. 16

## INTERNATIONAL SEARCH REPORT

| International application No. |
| --- |
| PCT/JP03/14373 |

**A. CLASSIFICATION OF SUBJECT MATTER**
Int.Cl⁷ F16D48/06

According to International Patent Classification (IPC) or to both national classification and IPC

**B. FIELDS SEARCHED**

Minimum documentation searched (classification system followed by classification symbols)
Int.Cl⁷ F16D48/00-48/12, F16H59/00-63/48, B60K41/00-41/18

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 11-241736 A (Isuzu Motors Ltd.), 07 September, 1999 (07.09.99), Full text (Family: none) | 1-17 |
| Y | US 4488625 A (TOYO KOGYO CO., LTD.), 18 December, 1984 (18.12.84), Column 4, line 63 to column 5, line 26; Figs. 3, 4 & JP 57-182530 A & DE 3216244 A | 1-17 |
| Y | JP 9-287625 A (Mitsubishi Motors Corp.), 04 November, 1997 (04.11.97), Column 16, line 14 to column 17, line 4 (Family: none) | 2,10 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 February, 2004 (17.02.04) | 02 March, 2004 (02.03.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| | International application No. |
|---|---|
| | PCT/JP03/14373 |

**C (Continuation). DOCUMENTS CONSIDERED TO BE RELEVANT**

| Category* | Citation of document, with indication, where appropriate, of the relevant passages | Relevant to claim No. |
|---|---|---|
| Y | US 5307269 A (ZEXEL CORP.),<br>26 April, 1994 (26.04.94),<br>Column 6, lines 26 to 62; column 7, line 59<br>to column 8, line 41<br>& JP 4-46224 A  & EP 461578 A1 | 3,11 |
| Y | JP 63-72923 A (Isuzu Motors Ltd.),<br>02 April, 1988 (02.04.88),<br>Full text<br>(Family: none) | 4,12 |
| Y | JP 2-97731 A (Toyoda Automatic Loom Works, Ltd.),<br>10 April, 1990 (10.04.90),<br>Page 4, upper left column, lines 1 to 12; Fig. 2<br>(Family: none) | 5,13 |
| Y | US 5064039 A (ZEXEL CORP.),<br>12 November, 1991 (12.11.91),<br>Full text<br>& JP 3-234924 A  & EP 441290 A2 | 6,7,14,15 |
| Y | JP 2003-21175 A (Isuzu Motors Ltd.),<br>24 January, 2003 (24.01.03),<br>Full text<br>(Family: none) | 8,16 |

Form PCT/ISA/210 (continuation of second sheet) (July 1998)